Europäisches Patentamt

European Patent Office

Office européen des brevets

(11) Veröffentlichungsnummer : **0 350 657 B1**

(12) **EUROPÄISCHE PATENTSCHRIFT**

(45) Veröffentlichungstag der Patentschrift :
**28.10.92 Patentblatt 92/44**

(21) Anmeldenummer : **89111055.3**

(22) Anmeldetag : **19.06.89**

(51) Int. Cl.⁵ : **A01C 5/06**

(54) Drillmaschine mit Säschare.

(30) Priorität : **12.07.88 DE 3823531**

(43) Veröffentlichungstag der Anmeldung :
**17.01.90 Patentblatt 90/03**

(45) Bekanntmachung des Hinweises auf die
Patenterteilung :
**28.10.92 Patentblatt 92/44**

(84) Benannte Vertragsstaaten :
**AT DE ES FR GB NL**

(56) Entgegenhaltungen :
**DE-A- 1 557 757**
**DE-A- 2 024 914**
**DE-A- 2 150 981**
**DE-C- 821 861**
**FR-A- 2 427 769**
**US-A- 3 227 226**

(73) Patentinhaber : **Amazonen-Werke H. Dreyer
GmbH & Co. KG
Am Amazonenwerk 9-13
W-4507 Hasbergen-Gaste (DE)**

(72) Erfinder : **Gattermann, Bernd
Eichenwall 3
W-2872 Hude 1 (DE)**
Erfinder : **Steenken, Bernd
Waldhöfe 17
W-4475 Sögel (DE)**
Erfinder : **Siefken, Claus
Bookhorn 29
W-2875 Ganderkesee 1 (DE)**

**Beschreibung**

Die Erfindung betrifft eine Drillmaschine mit Säscharen gemäß der Oberbegriffe der Patentansprüche 1 und 2.

Durch die DE-A 21 50 981 ist eine Drillmaschine gemäß des Oberbegriffes des Patentanspruches 1 bekannt. Bei dieser Drillmaschine sind an den Säscharen mittels Gelenke Zustreichelemente befestigt, die über zumindest eine Feder gegen den Boden gerückt werden, wobei Anschläge die Schwenkbewegung der Zustreicher nach vorn beim Ausheben der Säschare aus dem Boden begrenzen. Durch die Federn, die die Säschare während des Betriebes gegen den Boden drücken, werden die Zustreichelemente beim Ausheben der Säschare aus dem Boden nach vorn gegen einen am Säschar befestigten Anschlag gedrückt. Hierdurch überragen die Zustreichelemente im ausgehobenen Zustand der Säschare die Säschare nach unten. Beim Rückwärtsfahren der Sämaschine, beispielsweise beim Wenden am Feldende, besteht die Gefahr, daß die Zustreichelemente bzw. die Säschare verbogen werden können.

Des weiteren ist durch den Prospekt Amazone mit Druckvermerk D600 *1.88 eine Drillmaschine gemäß des Oberbegriffes des Patentanspruches 2 bekannt. Bei dieser Drillmaschine sind hinter den Säscharen an einem Querbalken befestigte Zustreielemente angeordnet, die mittels Gelenke an dem Balken befestigt sind und über zumindest eine Feder gegen den Boden gedrückt werden, wobei Anschläge die Schwenkbewegung der Zustreicher nach vorn beim Ausheben der Drillmaschine begrenzen. Vor allem bei Rückwärtsfahren, beispielsweise beim Wenden am Feldende, kann es zu Beschädigungen an den Zustreichelementen kommen, da diese nicht in Fahrtrichtung gesehen nach vorn ausweichen können.

Der Erfindung liegt daher die Aufgabe zugrunde, auf einfache Weise die Beschädigung der Zustreichelemente, vor allem beim Wenden am Feldende bei ausgehobener Drillmaschine zu verhindern.

Diese Aufgabe wird erfindungsgemäß durch die Kennzeichen gemäß der Patentansprüche 1 und 2 gelöst.

Infolge dieser Maßnahmen werden die Zustreichelemente durch die zwischen den Säscharen oder dem Querbalken und den Zustreichelementen als elastisch nachgiebige Federelemente ausgebildete Anschläge zunächst in einer schräg nach hinten weisenden Stellung bei ausgehobener Drillmaschine bzw. ausgehobenen Säscharen gehalten. Hierdurch wird zunächst erreicht, daß die Zustreichelemente beim Ausheben der Drillmaschine nicht nach unten fallen, sondern in höheren Position gehalten werden, wodurch bereits ein großes Maß an Sicherheit vor Verbiegung der Zustreichelemente in einfachster Weise erreicht wird. Sollten dennoch die Zustreichelemente nicht in einer ausreichenden Höhe sich befinden und beim Rückwärtsfahren, beispielsweise beim Wenden am Feldende, gegen Bodenhindernisse anstoßen, so können die Zustreichelemente nach vorn aufgrund der elastisch nachgiebigen Elemente ausweichen ohne das es zu Beschädigungen an den Zustreichelementen kommt. Die Zustreichelemente können bis in nach vorn - unten schrägweisender nach Stellung schwenken, so daß sich eine Schräge ergibt, wobei die Zustreichelemente dann aufgrund dieser Schräge über die Bodenhindernisse hinweggeschoben werden. Eine einfache Ausführung der elastisch nachgiebigen Federelemente wird dadurch erreicht, daß das Federelement als U-förmig gebogene Feder ausgebildet ist, deren einer Schenkel mit dem Zustreichelement und der andere Schenkel mit dem Säschar und dem Querbalken in Verbindung steht. Hierbei ist vorgesehen, daß der eine Schenkel des Federelementes mit dem Zustreichelement verbunden ist, und daß der andere Schenkel an einem Anschlag des Säschares und des Querbalkens anliegt. Hierdurch ergibt sich eine äußerst einfache konstruktive Ausbildung sowie Montage dieses Federelementes.

Eine besonders bevorzugte Ausführung ergibt sich dadurch, daß der an dem Säschar und dem Querbalken anliegende Schenkel des Federelementes gegenüber dem Säschar oder dem Querbalken beim Verschwenken des Zustreichelementes gegenüber dem Säschar oder dem Querbalken verschiebbar an dem Anschlag anliegt. Hierdurch wird insbesondere gewährleistet, daß das Federelement nicht zu stark der Federkraft der Feder, welche die Säschare während des Betriebes gegen den Boden drücken, während des Betriebes entgegen wirkt.

Weitere Einzelheiten der Erfindung sind im übrigen Unteransprüchen, der Beispielsbeschreibung und den Zeichnungen zu entnehmen. Hierbei zeigen

Fig. 1 die Drillmaschine mit den an den Säscharen angeordneten Zustreichelementen in der Seitenansicht,

Fig. 2 ein an einem Säschare angeordnetes Zustreichelement in vergrößerter Darstellung in Seitenansicht,

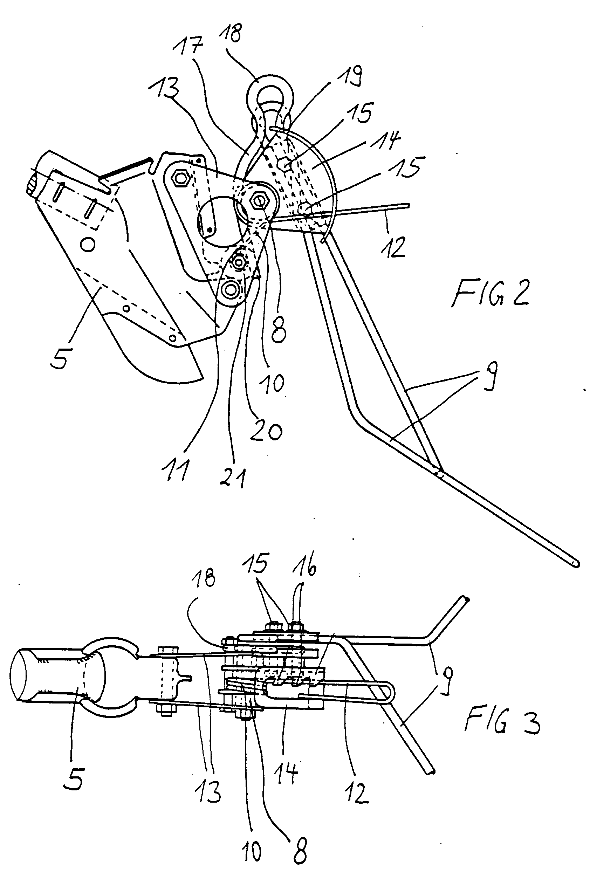

Fig. 3 ein an einem Säschar angeordnetes Zustreichelement in der Draufsicht und

Fig. 4 die Drillmaschine mit den an einem Querbalken angeordneten Zustreichelementen in der Seitenansicht.

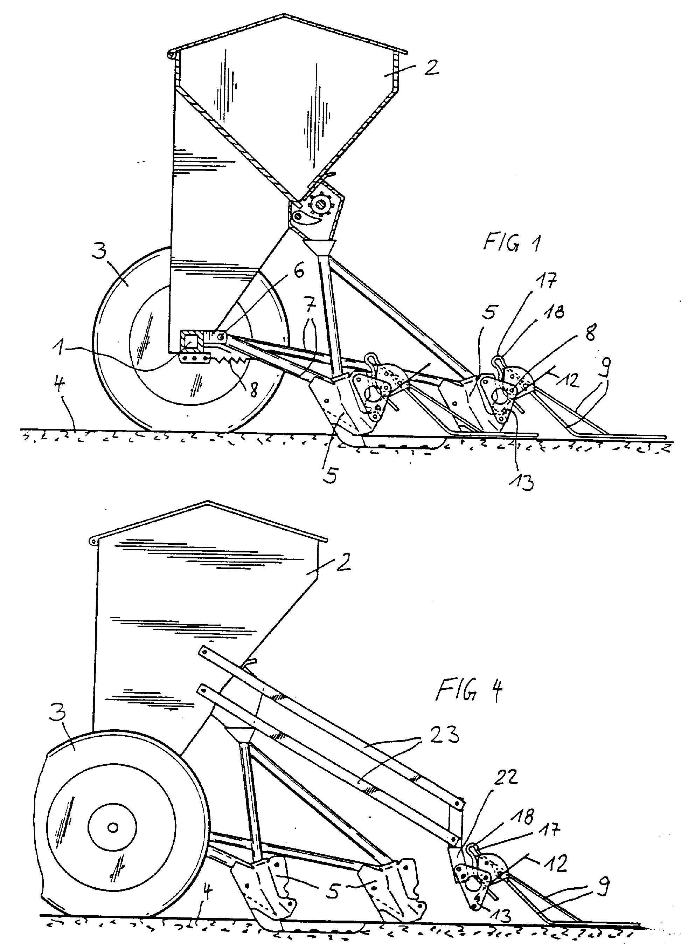

Die Drillmaschine gemäß Fig. 1 weißt den Rahmen 1 und den Vorratsbehälter 2 auf. Der Rahmen 1 stützt sich über die Laufräder 3 auf den Boden 4 ab. An dem Rahmen 1 sind quer zur Fahrtrichtung gesehen nebeneinander und versetzt zueinander die Säschare 5 angeordnet. Die Säschare 5 sind mittels der Gelenke 6 in aufrechter Ebene am Rahmen 1 angelenkt. Zwischen dem Rahmen 1 und den Scharhaltern 7 der Säschare 5 sind die Zugfedern 8 befestigt, mittels welcher die Säschare 5 gegen den Boden gedrückt werden. Die Spannung der Zugfedern 8 läßt sich verändern, so daß der Anpreßdruck der Säschare 5 gegen den Boden 4 entsprechend den Bodenverhältnissen eingestellt werden kann.

An den Säscharen 5 sind mittels der Gelenke 8 die Zustreichelemente 9 angeordnet. Durch das Gelenk 8 sind die Zustreichelemente 9 gegenüber den Säscharen 5 verschwenkbar. Zwischen den Säscharen 5 und den Zustreichelementen 9 ist die Feder 10 angeordnet. Die Feder 10 ist als Schenkelfeder ausgebildet. Das eine Ende 11 der Schenkelfeder liegt gegen das Säschar 5 an, während das andere Ende 12 der Feder 10 mit den Zustreichelementen 9 zusammenwirkt.

An dem Säschar 5 ist die Halterung 13 befestigt. An dieser Halterung 13 befindet sich das Gelenk 8, mit welchem das Halterungselement 14 für das Zustreichelement 9 an der Halterung 13 befestigt ist. An dem Halterungselement 14 ist über die Schraube 15 das Zustreichelement 9 befestigt. Die Halterung 14 weist auf ihrer Rückseite ein kreisbogenförmiges Segment mit den Rastelementen 16 auf, in welche das hintere Ende 12 der Feder 10 in unterschiedlichen Stellung eingehängt werden kann, so daß der auf die Zustreichelemente 9 ausgeübte Druck einstellbar ist.

Den Zustreichelementen 9 ist jeweils der Anschlag 17 zugeordnet. Dieser Anschlag 17 begrenzt die Schwenkbewegung der Zustreicher 9 beim Ausheben der Säschare 5 aus dem Boden nach vorn. Dieser Anschlag 17 ist als elastisch nachgiebiges Federelement 18 ausgebildet und hält die Zustreichelemente 9 in schräg nach hinten - unten weisender Stellung bei ausgehobenen Säscharen 5. Das Federelement 18 ist als U-förmig gebogene Feder ausgebildet, deren einer Schenkel 19 mit dem Zustreichelement 9 über die Halterung 14 in Verbindung steht, während der andere Schenkel 20 an dem am Säschar 5 bzw. der Halterung 13 angeordneten Anschlag 21 in Verbindung steht. Der Schenkel 20 liegt an dem Anschlag 21 des Säschares 5 an. Der Anschlag 21 ist als Rolle ausgebildet. Der Schenkel 20 des Federelementes 18 ist gegenüber dem Säschar 5 beim Verschwenken des Zustreichelementes 9 gegenüber dem Säschar verschiebbar an dem Anschlag 21 angeordnet.

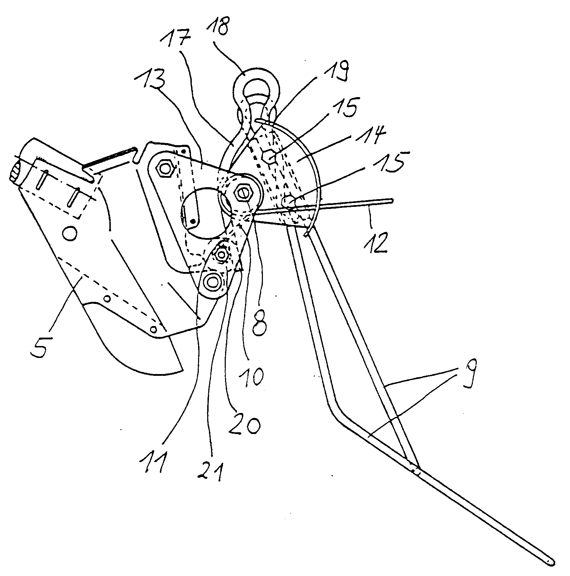

Beim dem Ausführungsbeispiel gemäß Fig. 4 ist die Halterung 13 des Zustreichelementes 9 nicht an den Säscharen 5, sondern an dem hinter den Säscharen 5 angeordneten Querbalken 22 befestigt, welcher über die beiden Lenker 23 am Rahmen der Drillmaschine angeordnet ist. Im übrigen sind die Zustreichelemente 9 an den Halterungen 13 in der gleichen Weise befestigt wie gemäß der Ausführungsbeispiele 1 bis 3.

Die Funktionsweise der Zustreichelemente 9 und des jeweiligen elastisch nachgiebigen Federelementes 18 ist folgende:

Beim Ausheben der Säschare 5 beispielsweise durch das Ausheben der gesamten Drillmaschine über den Dreipunktkraftheber eines Ackerschleppers, an dem die Drillmaschine in bekannter und daher nicht mehr näher dargestellter Weise angeordnet ist, wird durch das Federelement 18 gewährleistet, daß die Zustreichelemente 9 nicht ganz nach vorn schwenken können, sondern in schräg nach hinten - unten weisender Stellung gehalten werden. Sollten die Zustreichelemente 9 beim Rückwärtsfahren der Drillmaschine, beispielsweise beim Wenden am Feldende gegen den Boden oder im Boden festsitzende Hindernisse stoßen, so können die Zustreichelemente aufgrund der federnde Ausbildung des Anschlages 17, indem das Federelement 18 elastisch verbogen wird, in Richtung der Säschare 5 nach vorn schwenken, so daß eine Beschädigung der Zustreichelemente 9 sowie der Säschare 5 verhindert wird. Des weiteren wird dadurch gewährleistet, daß die Zustreichelemente 9 über den elastischen Anschlag 18 bei ausgehobenen Säscharen in schräg nach hinten - unten weisender Stellung gehalten werden und nicht ganz nach vorn schwenken können, daß ein größerer Bodenabstand der Zustreichelemente 9 vom Boden erreicht wird. Die elastischen Anschläge 17 bzw. das Federelement 18 ist im Verhältnis zu der Feder 10 derart ausgelegt, daß während der Drillarbeit die Feder 10 gegen die Kraft der Feder 18 das Zustreichelement 9 gegen den Boden in ausreichender und gewünschter Weise drücken kann. Ebenfalls ist die Feder 8 im Verhältnis zu der Feder 10 so ausgelegt, daß die Feder 8 das Säschar in den Boden hinein drücken kann, ohne daß die Gefahr besteht, daß über die Feder 10 und die Zustreichelemente 9 das Säschar 5 ausgehoben wird. Die Federn 8,10 und 17 müssen also in einem ausgewogenen Verhältnis zueinander stehen, so daß ein ausreichender Druck des Säschares 5 gegen den Boden sowie ein ausreichender Druck der Zustreichelemente 9 gegen den Boden 4 gewährleistet ist.

**Patentansprüche**

1. Drillmaschine mit Säscharen, an denen mittels eines Gelenkes Zustreichelemente befestigt sind, die über zumindest eine Feder gegen den Boden gedrückt werden, wobei Anschläge die Schwenkbewegung der Zustreicher in Fahrtrichtung gesehen nach vorn beim Ausheben der Säschare aus dem Boden begrenzen, dadurch gekennzeichnet, daß die den Zustreichelementen zugeordneten Anschläge (17) als elastisch nachgiebige Federelemente (18) ausgebildet sind und die Zustreichelemente (9) in in Fahrtrichtung gesehen nach hinten-schräg nach unten weisender Stellung bei ausgehobenen Säscharen (5) halten.

2. Drillmaschine mit Säscharen und hinter den Säscharen an einem Querbalken befestigte Zustreichelemente, die mittels Gelenke an dem Balken befestigt sind und über zumindest eine Feder gegen den Boden gedrückt werden, wobei Anschläge die Schwenkbewegung der Zustreicher in Fahrtrichtung gesehen nach vorn beim Ausheben der Drillmaschine begrenzen, dadurch gekennzeichnet, daß die den Zustreichelementen (9) zugeordneten Anschläge (17) als elastisch nachgiebige Federelemente (18) ausgebildet sind und die Zustreichelemente (9) in in Fahrtrichtung gesehen nach hinten-schräg nach unten weisender Stellung bei ausgehobener Drillmaschine halten.

3. Drillmaschine nach Anspruch 1 oder 2, dadurch gekennzeichnet, daß das Federelement (18) als U-förmig gebogene Feder ausgebildet ist, deren einer Schenkel (19) mit dem Zustreichelement (9) und der andere Schenkel (20) mit dem Säschar (5) oder dem Querbalken (22) in Verbindung steht.

4. Drillmaschine nach einem oder mehreren der vorstehenden Ansprüche, dadurch gekennzeichnet, daß der eine Schenkel (19) des Federelementes (18) mit dem Zustreichelement (9) verbunden ist, und daß der andere Schenkel (20) der Feder (18) an einem Anschlag (21) des Säschares (5) oder des Querbalkens (22) anliegt.

5. Drillmaschine nach einem oder mehreren der vorstehenden Ansprüche, dadurch gekennzeichnet, daß der an dem Säschar (5) oder dem Querbalken (22) anliegende Schenkel (20) des Federelementes (18) gegenüber dem Säschar (5) oder dem Querbalken (22) beim Verschwenken des Zustreichelementes (9) gegenüber dem Säschar (5) oder dem Querbalken (22) verschiebbar an dem Anschlag (21) anliegt.

6. Drillmaschine nach einem oder mehreren der vorstehenden Ansprüche, dadurch gekennzeichnet, daß der Anschlag als Rolle (21) ausgebildet ist.

7. Drillmaschine nach einem oder mehreren der vorstehenden Ansprüche, dadurch gekennzeichnet, daß die Feder (10) als Schenkelfeder ausgebildet ist, deren Spannung veränderbar ist, und daß die Federwindung der Feder (10) um den Gelenkbolzen des Gelenkes (8) des Zustreichelementes (9) gewunden ist.

## Claims

1. Drill with sowing coulters, on which closing members are mounted by means of a pivot joint and are urged towards the ground by means of at least one spring, stop members defining the pivotal movement of the closing members forwardly, when viewed with respect to the direction of travel, when the sowing coulters are raised from the ground, characterised in that the stop members (17), associated with the closing members, are in the form of elastically resilient spring elements (18) and retain the closing members (9) in a position so that they are orientated rearwardly, when viewed with respect to the direction of travel, and inclinedly downwardly when the sowing coulters (5) are in their raised position.

2. Drill with sowing coulters and closing members, which are mounted on a cross-beam behind the sowing coulters and are mounted on the beam by means of pivot joints, said closing members being urged towards the ground by means of at least one spring, wherein stop members, when the drill is raised, define the pivotal movement of the closing members forwardly, when viewed with respect to the direction of travel, characterised in that the stop members (17), associated with the closing members (9), are in the form of elastically resilient spring elements (18) and retain the closing members (9) in a position so that they are orientated rearwardly, when viewed with respect to the direction of travel, and inclinedly downwardly when the drill is in its raised position.

3. Drill according to claim 1 or 2, characterised in that the spring element (18) is in the form of a U-shaped spring, one leg (19) of which is in communication with the closing member (9), and the other leg (20) is in communication with the sowing coulter (5) or cross-beam (22).

4. Drill according to one or more of the preceding claims, characterised in that one leg (19) of the spring element (18) is connected to the closing member (9), and in that the other leg (20) of the spring (18) abuts against a stop member (21) of the sowing coulter (5) or cross-beam (22).

5. Drill according to one or more of the preceding claims, characterised in that the leg (20) of the spring element (18) abutting against the sowing coulter (5) or cross-beam (22) abuts against the stop member (21) so as to be displaceable relative to the sowing coulter (5) or cross-beam (22) during the pivotal movement of the closing member (9) relative to the sowing coulter (5) or cross-beam (22).

6. Drill according to one or more of the preceding claims, characterised in that the stop member is in the form of a roller (21).

**7.** Drill according to one of the preceding claims, characterised in that the spring (10) is in the form of a leg spring, the tension of which is variable, and in that the coil of the spring (10) is wound round the pivot pin of the pivot joint (8) of the closing member (9).

**Revendications**

1°) Semoir comportant des socs semeurs sur lesquels sont fixés des éléments racleurs par l'intermédiaire d'une articulation, ces éléments racleurs sont appliqués contre le sol par au moins un ressort et des butées limitent le mouvement de pivotement des éléments racleurs vers l'avant dans le sens du déplacement lorsque les socs sont soulevés du sol, semoir caractérisé en ce que les butées (17) associées aux éléments racleurs sont des éléments à ressort (18) souples élastiques et maintiennent les éléments racleurs (9) dans une position en biais vers le bas et vers l'arrière par rapport à la direction du déplacement lorsque les socs semeurs (5) sont soulevés.

2°) Semoir à socs semeurs et derrière les socs des éléments racleurs fixés à une poutre transversale elle-même fixée par des articulations à la poutre, ces éléments sont appliqués contre le sol par au moins un ressort, des butées limitant le mouvement de pivotement des éléments racleurs vers l'avant dans la direction de déplacement lorsque le semoir est soulevé, semoir caractérisé en ce que les butées (17) associées aux éléments racleurs (9) sont des éléments à ressort (18) souples élastiques et ils maintiennent les éléments racleurs (9) dans une position tournée vers l'arrière en biais vers le bas dans la direction du déplacement lorsque le semoir est soulevé.

3°) Semoir selon la revendication 1 ou 2, caractérisé en ce que l'élément à ressort (18) est un ressort en épingle à cheveux dont une branche (19) coopère avec l'élément racleur (9) et l'autre branche (20) coopère avec le soc (5) ou avec la poutre transversale (22).

4°) Semoir selon l'une ou plusieurs des revendications précédentes, caractérisé en ce qu'une branche (19) de l'élément à ressort (18) est reliée à l'élément racleur (9) et en ce que l'autre branche (20) du ressort (18) s'applique contre une butée (21) du soc (5) ou de la poutre transversale (22).

5°) Semoir selon l'une ou plusieurs des revendications précédentes, caractérisé en ce que la branche (20) de l'élément à ressort (18) appliquée contre le soc semeur (5) ou la poutre transversale (22) peut coulisser contre la butée (21) par rapport au soc (5) ou la poutre transversale (22) lors du pivotement de l'élément racleur (9) par rapport au soc (5) ou la poutre transversale (22).

6°) Semoir selon l'une ou plusieurs des revendications précédentes, caractérisé en ce que la butée est un galet (21).

7°) Semoir selon l'une ou plusieurs des revendications précédentes, en caractérisé en ce que le ressort (10) est un ressort en épingle à cheveux dont la tension est variable et en ce que l'enroulement du ressort (10) se fait autour de l'axe de l'articulation (8) de l'élément racleur (9).

FIG 1

FIG 4

FIG 2

FIG 3